# EUROPEAN PATENT APPLICATION

(11) **EP 4 672 126 A1**
(43) Date of publication of application: **31.12.2025**
(21) Application number: 24760292.3
(22) Date of filing: 19.02.2024
(51) Int. Cl.: G06Q 50/04, G06Q 30/0202

(54) **CONTROL DEVICE, HYDROGEN CARRIER MANUFACTURING SYSTEM, AND CONTROL METHOD**

(30) Priority: 21.02.2023 JP 2023025200
(71) Applicant: ENEOS Corporation, Chiyoda-ku Tokyo 100-8162 (JP)
(72) Inventor: INOUE, Jun, Tokyo 100-8162 (JP); MAEDA, Seiji, Tokyo 100-8162 (JP); NEGISHI, Yoshinori, Tokyo 100-8162 (JP); MACHII, Kenji, Tokyo 100-8162 (JP); SEIKE, Tadashi, Tokyo 100-8162 (JP); MINODA, Ai, Tokyo 100-8162 (JP)
(74) Representative: Piotrowicz, Pawel Jan Andrzej
(86) International application number: PCT/JP2024/005685
(87) International publication number: WO 2024/176993

(57) **Abstract**

A control apparatus includes an information acquisition unit configured to acquire consumption area information relating to a consumption area at which at least one of hydrogen or a hydrogen carrier is consumed; and a threshold setting unit configured to set a threshold for determining whether or not to purchase power for manufacturing at least one of the hydrogen or the hydrogen carrier at a manufacturing area at which the hydrogen carrier is manufactured, based on the consumption area information.

## Description

### TECHNICAL FIELD

The present invention relates to a control apparatus, a hydrogen carrier manufacturing system, and a control method.

### BACKGROUND ART

In recent years, environmental problems such as global warming have become a global issue, and hydrogen, which does not generate carbon dioxide when used, is attracting attention as a new energy to promote decarbonization. In particular, if hydrogen is produced by using renewable energy such as solar power generation and wind power generation, further reduction of carbon dioxide can be expected.

Technology for efficiently storing and transporting hydrogen is required. Substances capable of storing and transporting hydrogen are called hydrogen carriers, etc. Various technologies for converting gaseous hydrogen (hydrogen gas) into hydrogen carriers have been proposed.

For example, Patent Document 1 discloses a decarbonized energy transport system. In the invention disclosed in Patent Document 1, hydrogen gas is generated by electrolysis of water by using electric power obtained from renewable energy, aromatic hydrocarbons produced from biomass are hydrogenated by hydrogen gas, and the generated alicyclic hydrocarbons are transported.

### CITATION LIST

### PATENT DOCUMENTS

Patent Document 1: Japanese Unexamined Patent Application Publication No. 2021-95329

### SUMMARY OF INVENTION

### TECHNICAL PROBLEM

However, in the conventional technology, there is a problem that the price of electric power is not considered when manufacturing hydrogen carriers. For example, if hydrogen carriers are manufactured when the market price is high, there is a possibility that profit in the sale of the hydrogen carriers cannot be sufficiently secured.

In view of the above technical problems, an object of an aspect of the present invention is to appropriately set a threshold for determining whether to purchase electric power for manufacturing at least one of hydrogen or hydrogen carriers.

### SOLUTION TO PROBLEM

A control apparatus according to an aspect of the present invention includes an information acquisition unit configured to acquire consumption area information relating to a consumption area at which at least one of hydrogen or a hydrogen carrier is consumed; and a threshold setting unit configured to set a threshold for determining whether or not to purchase power for manufacturing at least one of the hydrogen or the hydrogen carrier at a manufacturing area at which the hydrogen carrier is manufactured, based on the consumption area information.

### BRIEF DESCRIPTION OF THE DRAWINGS

[FIG. 1] FIG. 1 is a block diagram illustrating a first example of a hydrogen supply chain.
[FIG. 2] FIG. 2 is a block diagram illustrating a second example of a hydrogen supply chain.
[FIG. 3] FIG. 3 is a block diagram illustrating a third example of a hydrogen supply chain.
[FIG. 4] FIG. 4 is a block diagram illustrating an example of the overall configuration of a hydrogen carrier manufacturing system in a first embodiment.
[FIG. 5] FIG. 5 is a block diagram illustrating an example of a hardware configuration of a computer.
[FIG. 6] FIG. 6 is a block diagram illustrating an example of the functional configuration of a control apparatus in the first embodiment.
[FIG. 7] FIG. 7 is a flowchart illustrating an example of the control method in the first embodiment.
[FIG. 8] FIG. 8 is a graph illustrating an example of a power market price profile.
[FIG. 9] FIG. 9 is a block diagram illustrating a fourth example of a hydrogen supply chain.
[FIG. 10] FIG. 10 is a block diagram illustrating an example of the overall configuration of the hydrogen carrier manufacturing system according to a second embodiment.
[FIG. 11] FIG. 11 is a block diagram illustrating an example of the functional configuration of the control apparatus according to the second embodiment.
[FIG. 12] FIG. 12 is a flowchart illustrating an example of the control method according to the second embodiment.
[FIG. 13] FIG. 13 is a block diagram illustrating an example of the overall configuration of the hydrogen gas generation system according to a modified example.
[FIG. 14] FIG. 14 is a block diagram illustrating an example of the functional configuration of the control apparatus according to modified example 1.
[FIG. 15] FIG. 15 is a block diagram illustrating an example of the functional configuration of the control apparatus according to modified example 2.

### DESCRIPTION OF EMBODIMENTS

Each embodiment of the present invention will be described below with reference to the attached drawings. In the present specification and the drawings, components having substantially the same functional configuration are denoted by the same reference numerals, and duplicate descriptions are omitted.

### [First embodiment]

The first embodiment of the present invention is a hydrogen carrier manufacturing system for manufacturing hydrogen carriers. The hydrogen carriers are substances obtained by converting gaseous hydrogen (hydrogen gas) into a liquid or the like that can be efficiently stored and transported. In the hydrogen carrier manufacturing system of the present embodiment, hydrogen gas is produced by electrolyzing water, and the hydrogen gas is converted into a liquid to produce the hydrogen carriers. Hereinafter, simply referring to "hydrogen" means gaseous hydrogen (hydrogen gas).

### <Hydrogen carriers>

Substances that can be used as hydrogen carriers are, for example, methylcyclohexane (MCH), ammonia (NH3), or liquid hydrogen (LH2). Methylcyclohexane can be obtained by reacting toluene with hydrogen. Ammonia can be obtained by reacting hydrogen with nitrogen. Liquid hydrogen is liquefied by cooling hydrogen to below the boiling point (-253 °C).

The hydrogen carriers can be converted back to hydrogen by a chemical reaction such as dehydrogenation, or the hydrogen carriers can be used as is (in the state of hydrogen carriers). Toluene obtained by dehydrogenation of methylcyclohexane can be transported to the manufacturing area of hydrogen carriers and reused for the production of new methylcyclohexane. Ammonia can be used as a raw material for fertilizers and chemical products, for example. Ammonia itself can also be used as a fuel. Liquid hydrogen can be used as a fuel for rockets, for example.

In the hydrogen carrier manufacturing system of the present embodiment, hydrogen is produced by using electric power derived from renewable energy. In the hydrogen carrier manufacturing system of the present embodiment, hydrogen is converted into hydrogen carriers by using power derived from renewable energy. Therefore, the hydrogen carriers produced by the hydrogen carrier manufacturing system of the present embodiment can be used as clean energy with reduced emission of carbon dioxide in the cycle from production to use.

### <Hydrogen supply chain>

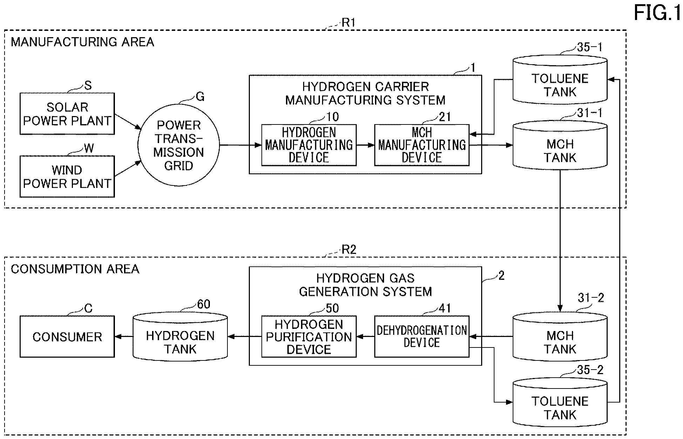

The hydrogen supply chain of the present embodiment will be described with reference to FIGS. 1 to 3. The hydrogen supply chain is a series of flows from production, transportation, and consumption of hydrogen.

### <<When the hydrogen carriers are methylcyclohexane>>

FIG. 1 illustrates an example of the hydrogen supply chain when the hydrogen carriers are methylcyclohexane. As illustrated in FIG. 1, the hydrogen supply chain in the present embodiment includes a manufacturing area R1 and a consumption area R2. At least one of hydrogen or hydrogen carriers (hereinafter abbreviated as "hydrogen and the like") is manufactured at the manufacturing area R1. Hydrogen and the like are consumed at the consumption area R2. The manufacturing area R1 and the consumption area R2 may be different countries or different regions within the same country. At least one of the manufacturing area R1 or the consumption area R2 may be plural. The transport route of the hydrogen carriers connecting the manufacturing area R1 and the consumption area R2 may be a land route only, or may include a sea route or an air route.

A hydrogen carrier manufacturing system 1, an MCH tank 31-1, and a toluene tank 35-1 are installed in the manufacturing area R1. Hydrogen carriers (methylcyclohexane in this example) manufactured by the hydrogen carrier manufacturing system 1 are stored in the MCH tank 31-1. Toluene used for manufacturing methylcyclohexane is stored in the toluene tank 35-1.

The hydrogen carrier manufacturing system 1 is connected to a power transmission grid G. The power transmission grid G is connected to a solar power plant S and a wind power plant W that supply power derived from renewable energy. A thermal power plant or a nuclear power plant that supply power derived from energy other than renewable energy may be connected to power transmission grid G. The hydrogen carrier manufacturing system 1 receives power derived from renewable energy from a solar power plant S or a wind power plant W via power transmission grid G.

The hydrogen carrier manufacturing system 1 produces methylcyclohexane by using power supplied from power transmission grid G. The hydrogen carrier manufacturing system 1 includes a hydrogen manufacturing device 10 and an MCH manufacturing device 21. The hydrogen manufacturing device 10 manufactures hydrogen by using power supplied from power transmission grid G. The MCH manufacturing device 21 produces methylcyclohexane by reacting hydrogen manufactured by the hydrogen manufacturing device 10 with toluene supplied from the toluene tank 35-1. Methylcyclohexane produced by the MCH manufacturing device 21 is stored in the MCH tank 31-1.

Methylcyclohexane stored in the MCH tank 31-1 is transported from the manufacturing area R1 to the consumption area R2 by means of transportation corresponding to the transportation route between the manufacturing area R1 and the consumption area R2. For transportation of methylcyclohexane, for example, a tanker or the like is used by sea route and a tank truck or the like is used by land route. However, transportation means are not limited to these, and any means capable of transporting methylcyclohexane safely may be used.

A hydrogen gas generation system 2, an MCH tank 31-2, a toluene tank 35-2, and a hydrogen tank 60 are installed in the consumption area R2. Methylcyclohexane transported from the manufacturing area R1 is stored in the MCH tank 31-2. Toluene obtained by dehydrogenating methylcyclohexane is stored in the toluene tank 35-2. Toluene stored in the toluene tank 35-2 is transported from the consumption area R2 to the manufacturing area R1 by means of transportation corresponding to the transportation route between the manufacturing area R1 and the consumption area R2. Toluene transported to the manufacturing area R1 is stored in a toluene tank 35-1.

The hydrogen gas generation system 2 converts methylcyclohexane supplied from the MCH tank 31-2 back to hydrogen. The hydrogen gas generation system 2 includes a dehydrogenation device 41 and a hydrogen purification device 50. The dehydrogenation device 41 separates methylcyclohexane supplied from the MCH tank 31-2 into hydrogen and toluene by a chemical reaction such as dehydrogenation. The toluene obtained by the dehydrogenation device 41 is stored in a toluene tank 35-2.

The hydrogen purification device 50 purifies the hydrogen obtained by the dehydrogenation device 41 into high-purity hydrogen. The hydrogen purified by the hydrogen purification device 50 is stored in a hydrogen tank 60.

The hydrogen stored in the hydrogen tank 60 is supplied to the consumer C to be consumed. The supply to the consumer C may be carried by filling the hydrogen into a container such as a hydrogen cylinder, or may be carried via a pre-installed pipeline.

The consumer C may be, for example, a steel plant, a power plant, a chemical plant, or a hydrogen station. The consumer C may be the hydrogen gas generation system 2 itself. That is, the hydrogen obtained in the hydrogen gas generation system 2 may be consumed in the hydrogen gas generation system 2 or in another system attached to the hydrogen gas generation system 2.

### <<When the hydrogen carriers are ammonia>>

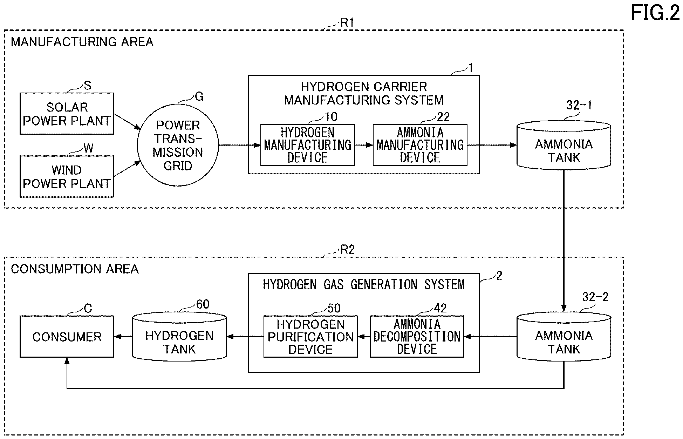

FIG. 2 is a diagram illustrating an example of the hydrogen supply chain when the hydrogen carriers are ammonia. As illustrated in FIG. 2, when the hydrogen carriers are ammonia, the ammonia tank 32-1 is installed in the manufacturing area R1 instead of the MCH tank 31-1 and the toluene tank 35-1. The hydrogen carrier manufacturing system 1 is provided with an ammonia manufacturing device 22 instead of the MCH manufacturing device 21.

The ammonia manufacturing device 22 reacts nitrogen in the atmosphere with hydrogen manufactured by the hydrogen manufacturing device 10 to produce ammonia. The nitrogen can be obtained by an air separating device or the like. The ammonia produced by the ammonia manufacturing device 22 is stored in an ammonia tank 32-1.

An ammonia tank 32-2 is installed in the consumption area R2 instead of the MCH tank 31-2 and the toluene tank 35-2. The hydrogen gas generation system 2 is provided with an ammonia decomposition device 42 instead of the dehydrogenation device 41.

The ammonia decomposition device 42 reacts ammonia supplied from the ammonia tank 32-2 with a catalyst to separate hydrogen and nitrogen. The ammonia decomposition device 42 may convert ammonia into ammonia gas by vaporizing ammonia.

Hydrogen or ammonia gas obtained by the ammonia decomposition device 42 is supplied to the consumer C to be consumed. Ammonia stored in the ammonia tank 32-2 may be supplied to the consumer C as ammonia to be consumed. Hydrogen or ammonia may be consumed inside the hydrogen gas generation system 2 or in another system attached to the hydrogen gas generation system 2.

### <<When the hydrogen carriers are liquid hydrogen>>

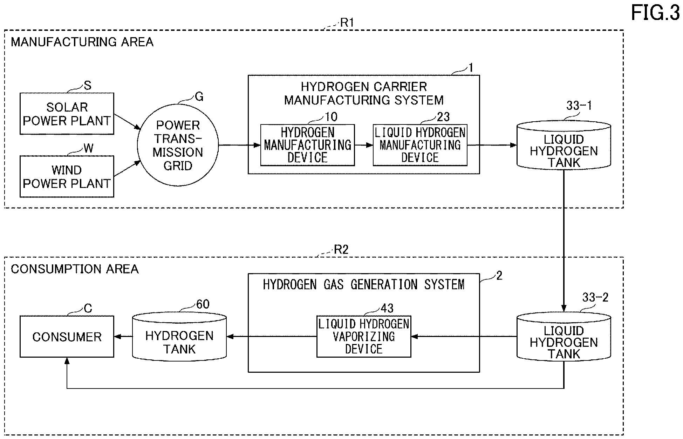

FIG. 3 illustrates an example of a hydrogen supply chain when the hydrogen carriers are liquid hydrogen. As illustrated in FIG. 3, when the hydrogen carriers are liquid hydrogen, a liquid hydrogen tank 33-1 is installed in the manufacturing area R1 instead of the MCH tank 31-1 and the toluene tank 35-1 (or the ammonia tank 32-1). Further, the hydrogen carrier manufacturing system 1 includes a liquid hydrogen manufacturing device 23 instead of the MCH manufacturing device 21 (or the ammonia manufacturing device 22).

The liquid hydrogen manufacturing device 23 cools hydrogen manufactured by the hydrogen manufacturing device 10 to produce liquid hydrogen. The liquid hydrogen manufactured by the liquid hydrogen manufacturing device 23 is stored in a liquid hydrogen tank 33-1.

A liquid hydrogen tank 33-2 is installed in the consumption area R2 instead of the MCH tank 31-2 and the toluene tank 35-2 (or the ammonia tank 32-2). The hydrogen gas generation system 2 is provided with a liquid hydrogen vaporizing device 43 instead of the dehydrogenation device 41 (or the ammonia decomposition device 42) and the hydrogen purification device 50.

The liquid hydrogen vaporizing device 43 vaporizes the liquid hydrogen supplied from the liquid hydrogen tank 33-2 and converts it back to hydrogen. The hydrogen obtained by the liquid hydrogen vaporizing device 43 is supplied to the consumer C to be consumed. The liquid hydrogen stored in the liquid hydrogen tank 33-2 may be supplied to the consumer C as liquid hydrogen to be consumed. Note that hydrogen or liquid hydrogen may be consumed in the hydrogen gas generation system 2 or in another system attached to the hydrogen gas generation system 2.

### <Overall configuration of hydrogen carrier manufacturing system>

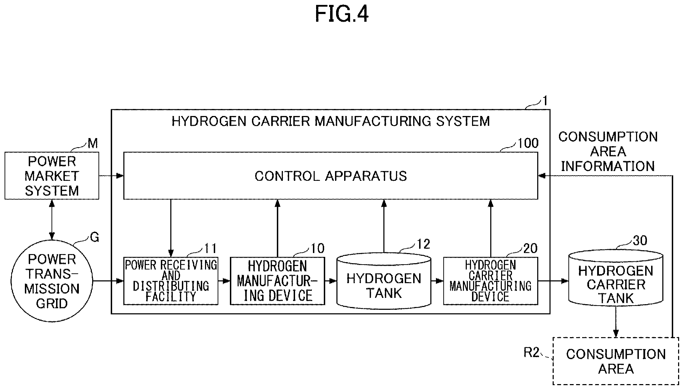

The overall configuration of the hydrogen carrier manufacturing system of the present embodiment will be described with reference to FIG. 4. FIG. 4 is a block diagram illustrating an example of the overall configuration of the hydrogen carrier manufacturing system of the present embodiment.

As illustrated in FIG. 4, the hydrogen carrier manufacturing system 1 of the present embodiment includes the hydrogen manufacturing device 10, a power receiving and distributing facility 11, a hydrogen tank 12, a hydrogen carrier manufacturing device 20, and a control apparatus 100. The hydrogen carrier manufacturing system 1 of the present embodiment is connected to a power market system M located at the manufacturing area R1, a power transmission grid G, and a hydrogen carrier tank 30.

The power market system M is an information processing system for managing the power market. In the power market, power supplied by power transmission grid G is traded. The power market system M determines the power price according to the demand and supply of power. In the present embodiment, the power market system M determines the power price for each generation system of power. For example, the power market system M determines different prices for power derived from renewable energy (for example, solar, wind, geothermal, or biomass) and power derived from other energy other than renewable energy (for example, coal, oil, natural gas, or nuclear power).

The power receiving and distributing facility 11 receives power supplied from power transmission grid G and distributes power to each device of the hydrogen carrier manufacturing system 1. The power receiving and distributing facility 11 can set power to be distributed to each device. The power receiving and distributing facility 11 sets at least power to be input to the hydrogen manufacturing device 10 based on a signal received from the control apparatus 100.

The hydrogen manufacturing device 10 manufactures hydrogen by using power input from the power receiving and distributing facility 11. In the present embodiment, the hydrogen manufacturing device 10 generates hydrogen by electrolyzing water stored in the water electrolyzer. The hydrogen manufactured by the hydrogen manufacturing device 10 is stored in a hydrogen tank 12.

The amount of hydrogen manufactured by the hydrogen manufacturing device 10 varies according to the amount of input power. Therefore, the amount of hydrogen manufactured by the hydrogen manufacturing device 10 can be changed by changing the power input from the power receiving and distributing facility 11 to the hydrogen manufacturing device 10.

The hydrogen manufactured by the hydrogen manufacturing device 10 is stored in the hydrogen tank 12. The hydrogen stored in the hydrogen tank 12 is supplied to the hydrogen carrier manufacturing device 20.

The hydrogen carrier manufacturing device 20 converts the hydrogen supplied from the hydrogen tank 12 into hydrogen carriers. An example of the hydrogen carriers is methylcyclohexane, ammonia, or liquid hydrogen. The hydrogen carrier manufacturing device 20 manufactures hydrogen carriers by performing processing according to the type of hydrogen carriers. The hydrogen carriers manufactured by the hydrogen carrier manufacturing device 20 are stored in the hydrogen carrier tank 30.

The control apparatus 100 is an information processing apparatus such as a personal computer, a workstation, or a server for controlling the operation of each device included in the hydrogen carrier manufacturing system 1. The control apparatus 100 is configured to be capable of data communication with the power market system M, the power receiving and distributing facility 11, the hydrogen manufacturing device 10, the hydrogen tank 12, and the hydrogen carrier manufacturing device 20 through a communication network.

The control apparatus 100 generates information (hereinafter also referred to as "control information") for controlling each device based on information (hereinafter also referred to as "consumption area information") about the consumption area R2 that consumes at least one of hydrogen or the hydrogen carriers. The control apparatus 100 transmits a control signal for controlling at least the operation of the power receiving and distributing facility 11 based on the generated control information.

The overall configuration of the hydrogen carrier manufacturing system 1 illustrated in FIG. 4 is an example, and various system configurations can be used depending on applications and purposes. For example, one or more of the hydrogen manufacturing device 10, the hydrogen carrier manufacturing device 20, and the control apparatus 100 may be included in the hydrogen carrier manufacturing system 1 by being provided in plurality. For example, the control apparatus 100 may be implemented by multiple computers or may be implemented as a cloud computing service. The division of devices such as the hydrogen manufacturing device 10, the hydrogen carrier manufacturing device 20, and the control apparatus 100 illustrated in FIG. 4 is an example.

### <Hardware configuration of the hydrogen carrier manufacturing system>

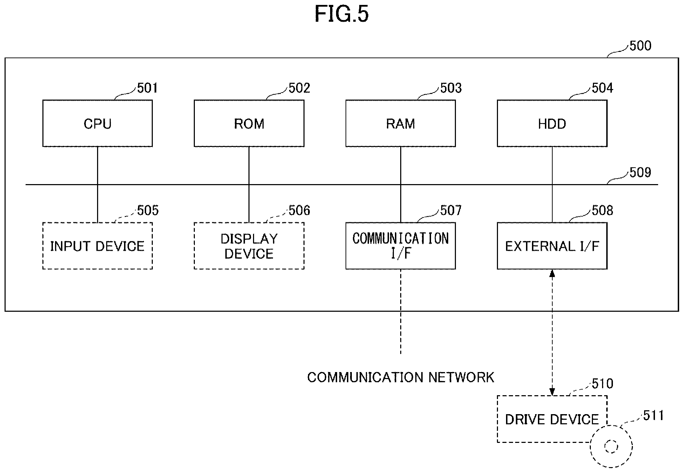

The hardware configuration of each device included in the hydrogen carrier manufacturing system 1 of the present embodiment will be described with reference to FIG. 5.

### <<Hardware configuration of the computer>>

The control apparatus 100 of the present embodiment is implemented by, for example, a computer. FIG. 5 is a block diagram illustrating an example of the hardware configuration of the computer in the present embodiment.

As illustrated in FIG. 5, a computer 500 in the present embodiment includes a CPU (Central Processing Unit) 501, a ROM (Read Only Memory) 502, a RAM (Random Access Memory) 503, an HDD (Hard Disk Drive) 504, an input device 505, a display device 506, a communication I/F (interface) 507, and an external I/F 508. The CPU 501, the ROM 502, and the RAM 503 form what is referred to as a computer. The pieces of hardware of the computer 500 are connected to each other via a bus line 509. The input device 505 and the display device 506 may be connected to the external I/F 508 for use.

The CPU 501 is an arithmetic unit that loads programs and data from a storage device such as the ROM 502 or the HDD 504 onto the RAM 503 and executes processing to implement the control and functions of the entire computer 500. The computer 500 may have a GPU (Graphics Processing Unit) in addition to the CPU 501 or instead of the CPU 501.

The ROM 502 is an example of a nonvolatile semiconductor memory (storage device) that can retain programs and data even when the power is turned off. The ROM 502 functions as a main storage device that stores various programs and data necessary for the CPU 501 to execute various programs installed in the HDD 504. Specifically, the ROM 502 stores boot programs such as BIOS (Basic Input/Output System) and EFI (Extensible Firmware Interface) that are executed when the computer 500 is started, and data such as OS (Operating System) settings and network settings.

The RAM 503 is an example of a volatile semiconductor memory (storage device) in which programs and data are erased when the power is turned off. The RAM 503 is, for example, a DRAM (Dynamic Random Access Memory) or a SRAM (Static Random Access Memory). The RAM 503 provides a work area that is loaded when various programs installed in the HDD 504 are executed by the CPU 501.

The HDD 504 is an example of a nonvolatile storage device that stores programs and data. The programs and data stored in the HDD 504 include the OS, which is the basic software that controls the entire computer 500, and applications that provide various functions on the OS. The computer 500 may use a storage device (e.g., SSD: Solid State Drive, etc.) using a flash memory as a storage medium instead of the HDD 504.

The input device 505 includes a touch panel, operation keys and buttons, a keyboard and a mouse used by the user to input various signals, and a microphone to input sound data such as sound.

The display device 506 includes a liquid crystal for displaying a screen, a display such as organic EL (Electro-Luminescence), and a speaker for outputting sound data such as sound.

The communication I/F 507 is an interface for connecting to a communication network for the computer 500 to perform data communication.

The external I/F 508 is an interface with an external device. The external device includes a drive device 510.

The drive device 510 is a device for setting the recording medium 511. The recording medium 511 here includes a medium for recording information optically, electrically, or magnetically, such as a CD-ROM, a flexible disk, a magneto-optical disk, or the like. The recording medium 511 may also include a semiconductor memory for recording information electrically, such as a ROM, a flash memory, or the like. Thus, the computer 500 can read and/or write data from/in the recording medium 511 via the external I/F 508.

Various programs installed on the HDD 504 are installed by, for example, setting the distributed recording medium 511 to the drive device 510 connected to the external I/F 508, and reading various programs recorded on the recording medium 511 by the drive device 510. Alternatively, various programs installed on the HDD 504 may be installed by being downloaded from another network different from the communication network via the communication I/F 507.

### <Functional configuration of hydrogen carrier manufacturing system>

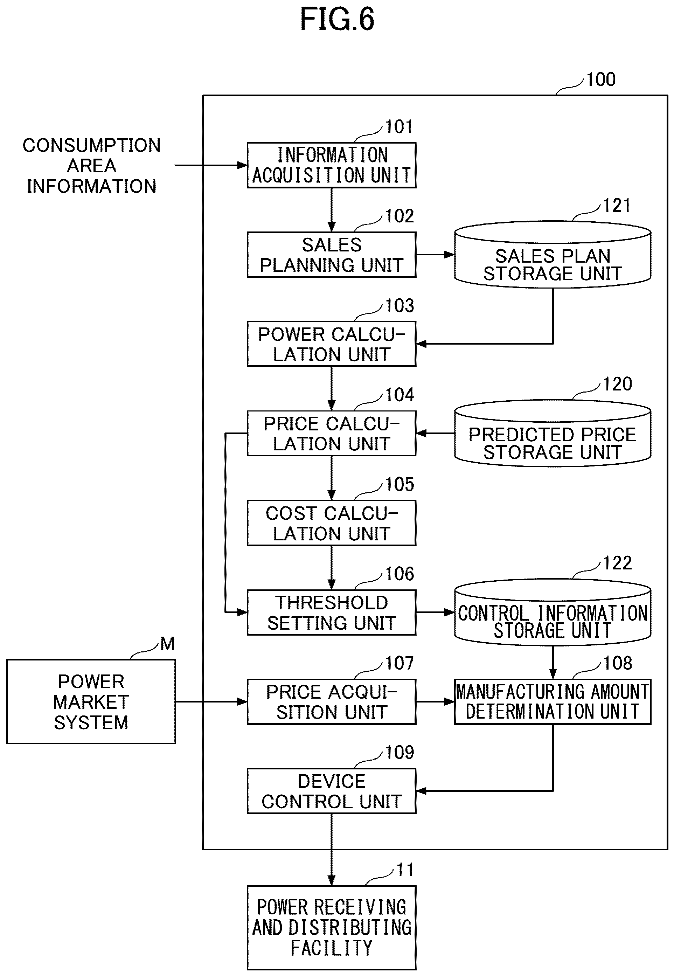

The functional configuration of the hydrogen carrier manufacturing system of the present embodiment will be described with reference to FIG. 6. FIG. 6 is a block diagram illustrating an example of the functional configuration of the hydrogen carrier manufacturing system 1 of the present embodiment.

### <<Functional configuration of the control apparatus>>

As illustrated in FIG. 6, the control apparatus 100 in the present embodiment includes an information acquisition unit 101, a sales planning unit 102, a power calculation unit 103, a price calculation unit 104, a cost calculation unit 105, a threshold setting unit 106, a price acquisition unit 107, a manufacturing amount determination unit 108, a device control unit 109, a predicted price storage unit 120, a sales plan storage unit 121, and a control information storage unit 122.

The information acquisition unit 101, the sales planning unit 102, the power calculation unit 103, the price calculation unit 104, the cost calculation unit 105, the threshold setting unit 106, the price acquisition unit 107, the manufacturing amount determination unit 108, and the device control unit 109 are implemented by, for example, processing that causes the CPU 501 to execute a program loaded on the RAM 503 from the HDD 504 illustrated in FIG. 5.

The predicted price storage unit 120, the sales plan storage unit 121, and the control information storage unit 122 are implemented by using, for example, the HDD 504 illustrated in FIG. 5.

The predicted price storage unit 120 stores information (hereinafter also referred to as "power market price profile") indicating the predicted value of the market price (hereinafter also referred to as "power market price") at which power derived from renewable energy is traded in the power market. The power market price is determined at predetermined time intervals (for example, every five minutes) in the power market system M. The power market price profile is information predicting the frequency distribution of the power market price in a predetermined plan period (for example, 1 month).

The sales plan storage unit 121 stores information indicating the sales plan of the hydrogen carriers manufactured by the hydrogen carrier manufacturing system 1. The sales plan in the present embodiment includes the sales amount and the sales price of the hydrogen carriers in the predetermined plan period. The sales plan information stored in the sales plan storage unit 121 is generated by the sales planning unit 102.

The control information storage unit 122 stores control information for controlling each device included in the hydrogen carrier manufacturing system 1. The control information stored in the control information storage unit 122 is generated by the threshold setting unit 106.

The control information in the present embodiment includes a threshold for determining whether or not to purchase power for manufacturing at least one of hydrogen or hydrogen carriers. The threshold is, for example, an upper limit price with respect to the power market price derived from renewable energy. Hereinafter, the upper limit power price relative to the power market price is referred to as the "upper limit power price".

The information acquisition unit 101 acquires consumption area information related to the consumption area of the hydrogen carriers. The consumption area information in the present embodiment includes the demand amount of hydrogen and the like, the sales price of hydrogen and the like, and the constraint conditions for delivering the hydrogen carriers.

The demand amount of hydrogen and the like is the amount of hydrogen and the like, which is expected to be demanded in the consumption area R2 during a predetermined plan period. The demand amount of hydrogen and the like can be acquired, for example, by inquiring of the past sales amount and the future purchase amount from the consumer C existing in the consumption area R2.

The sales price of hydrogen and the like is the price of hydrogen and the like that is expected to be available for sale in the consumption area R2 during the predetermined plan period. The sales price of hydrogen and the like can be obtained, for example, by inquiring of the past sales price or the future asking price from the consumer C existing in the consumption area R2.

The constraint conditions for delivering the hydrogen carriers include at least one of the constraints on the facilities for receiving the hydrogen carriers at the consumption area R2 (facility constraints) or the constraints on the transportation means for transporting the hydrogen carriers from the manufacturing area R1 to the consumption area R2 (transportation constraints). The facility constraints include, for example, the capacity of the unloading pier, the capacity of the tank for storing the hydrogen carriers at the receiving area, the processing amount of dehydrogenation and the like in the hydrogen gas generation system 2, and the capacity of the liquid feeding or air feeding facilities. The transportation constraints include, for example, the constraints on shipping such as the number of available tankers.

The sales planning unit 102 makes a sales plan for the hydrogen carriers during a predetermined plan period based on the consumption area information acquired by the information acquisition unit 101. The sales planning unit 102 stores information indicating the planned sales plan in the sales plan storage unit 121.

The sales planning unit 102 may generate information indicating a sales plan by presenting the consumption area information acquired by the information acquisition unit 101 to the user and receiving the sales plan input by the user. The sales planning unit 102 may generate information indicating a sales plan by applying predetermined rules to the consumption area information acquired by the information acquisition unit 101. These methods of making sales plans are examples. The sales planning unit 102 may generate information indicating a sales plan by any method for generating a sales plan based on the consumption area information.

The power calculation unit 103 calculates the manufacturing amount of the hydrogen carriers based on the sales plan made by the sales planning unit 102. The power calculation unit 103 also calculates the amount of power required (hereinafter, also referred to as "required power amount") to satisfy the manufacturing amount of the hydrogen carriers.

The price calculation unit 104 calculates the average power price and the maximum power price when the required power amount calculated by the power calculation unit 103 is satisfied based on the power market price profile stored in the predicted price storage unit 120.

The price calculation unit 104 calculates the average power price and the maximum power price while considering the rated ranges of the hydrogen manufacturing device 10 and the hydrogen carrier manufacturing device 20. When the power supplied from power transmission grid G includes the power based on the power procurement contract with a fixed power price, the price calculation unit 104 calculates the average power price and the maximum power price while considering the fixed power price and the amount of power supplied under the corresponding power procurement contract. Further, the price calculation unit 104 calculates the average power price and the maximum power price such that the fluctuation of the manufacturing amount in the hydrogen manufacturing device 10 can be balanced out by the capacity of the hydrogen tank 12.

The cost calculation unit 105 calculates the levelized cost of hydrogen (LCoH) of the hydrogen carriers based on the average power price calculated by the price calculation unit 104. The levelized cost of hydrogen is the cost calculated from the total cost including the initial cost, operation cost, and disposal cost of the facility related to the manufacturing of the hydrogen carriers. The initial cost and disposal cost can be calculated in advance when the hydrogen carrier manufacturing system 1 is constructed. Among the operating costs, the costs due to transportation or dehydrogenation of the hydrogen carriers usually do not change significantly. However, these costs may be reviewed at an appropriate time, such as when the equipment of the hydrogen gas generation system 2 is updated.

The threshold setting unit 106 calculates the difference between the levelized hydrogen cost calculated by the cost calculation unit 105 and the sales price of the hydrogen carriers planned by the sales planning unit 102. The threshold setting unit 106 compares the difference between the levelized hydrogen cost and the sales price with a predetermined threshold. The predetermined threshold is calculated in advance in consideration of the target amount of profit to be obtained by the sales of the hydrogen carriers, the transportation cost of transporting the hydrogen carriers from the manufacturing area R1 to the consumption area R2, and the processing cost for dehydrogenation and the like in the hydrogen gas generation system 2.

When the difference between the levelized hydrogen cost and the sales price is less than the threshold, the threshold setting unit 106 returns the processing to the sales planning unit 102 and again plans the sales plan. On the other hand, when the difference between the levelized hydrogen cost and the sales price is greater than or equal to the threshold, the threshold setting unit 106 sets the maximum power price calculated by the price calculation unit 104 as the upper limit power price. The threshold setting unit 106 stores the set upper limit power price as control information in the control information storage unit 122.

The price acquisition unit 107 acquires the power market price from the power market system M at predetermined time intervals. It is preferable that the time interval for acquiring the power market price coincides with the time interval at which the power market price is updated in the power market system M. In the present embodiment, the price acquisition unit 107 acquires the power market price every 5 minutes.

The manufacturing amount determination unit 108 compares the power market price acquired by the price acquisition unit 107 with the upper limit power price stored in the control information storage unit 122. The manufacturing amount determination unit 108 determines the manufacturing amount of the hydrogen carriers based on the comparison result of comparison between the power market price and the upper limit power price.

For example, when the power market price is higher than the upper limit power price, the device control unit 109 decreases the manufacturing amount of the hydrogen carriers. Further, when the power market price is less than or equal to the upper limit power price, for example, the device control unit 109 increases the manufacturing amount of the hydrogen carriers.

The device control unit 109 determines whether to change the manufacturing amount of the hydrogen carriers based on the manufacturing amount of the hydrogen carriers determined by the manufacturing amount determination unit 108. When changing the manufacturing amount of the hydrogen carriers, the device control unit 109 transmits, to the power receiving and distributing facility 11, a control signal for changing the power input to the hydrogen manufacturing device 10.

### <Processing procedures of control method>

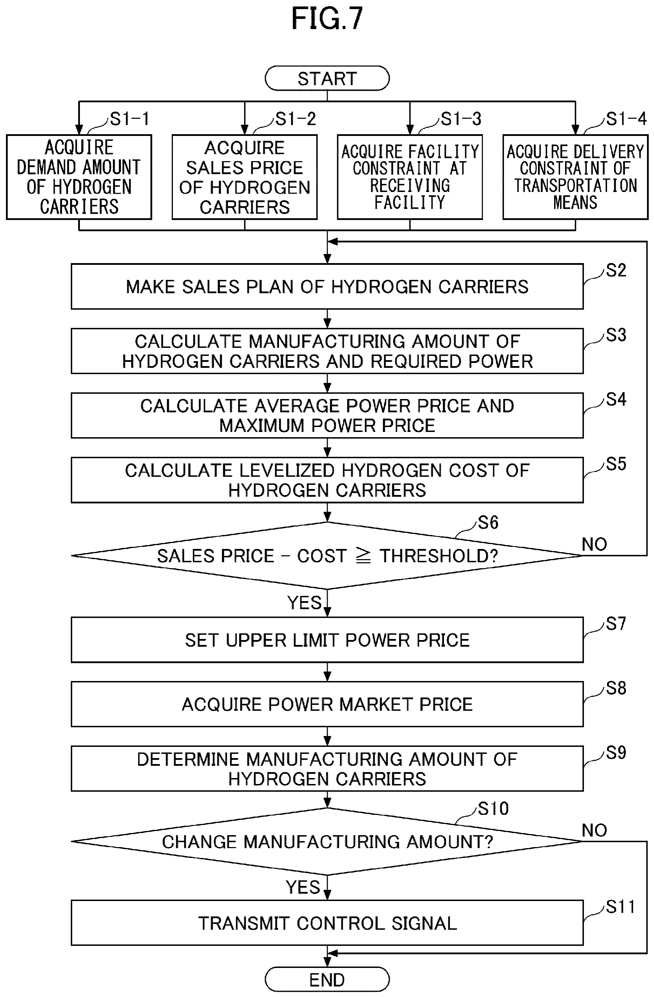

The control method executed by the control apparatus 100 in the present embodiment will be described with reference to FIG. 7. FIG. 7 is a flowchart illustrating an example of the control method in the present embodiment.

In step S1-1, the information acquisition unit 101 of the control apparatus 100 acquires the demand amount of hydrogen and the like in the consumption area R2. When there are multiple consumption areas R2, the information acquisition unit 101 acquires the demand amount of hydrogen and the like for each of the multiple consumption areas R2. The information acquisition unit 101 sends the information indicating the acquired demand amount of hydrogen and the like to the sales planning unit 102.

In step S1-2, the information acquisition unit 101 of the control apparatus 100 acquires the sales price of hydrogen and the like in the consumption area R2. If there are a plurality of consumption areas R2, the information acquisition unit 101 acquires the sales price of hydrogen and the like for each of the plurality of consumption areas R2. The information acquisition unit 101 sends information indicating the acquired sales price of hydrogen and the like to the sales planning unit 102.

In step S1-3, the information acquisition unit 101 of the control apparatus 100 acquires the facility constraint in the consumption area R2. If there are a plurality of consumption areas R2, the information acquisition unit 101 acquires the facility constraint in each of the plurality of consumption areas R2. The information acquisition unit 101 sends information indicating the acquired facility constraint to the sales planning unit 102.

In step S1-4, the information acquisition unit 101 of the control apparatus 100 acquires the transportation constraint in the consumption area R2. If there are a plurality of consumption areas R2, the information acquisition unit 101 acquires the transportation constraint in each of the plurality of consumption areas R2. The information acquisition unit 101 sends information indicating the acquired transportation constraint to the sales planning unit 102.

In step S2, the sales planning unit 102 of the control apparatus 100 receives the consumption area information from the information acquisition unit 101. The consumption area information includes the information indicating the demand amount, sales price, facility constraint, and transportation constraint acquired in step S1-1 to step S1-4.

Next, based on the received consumption area information, the sales planning unit 102 makes a sales plan of the hydrogen carriers for a predetermined plan period. Subsequently, the sales planning unit 102 stores the information indicating the planned sales plan in the sales plan storage unit 121.

For example, the sales planning unit 102 may increase the sales amount of the hydrogen carriers when the demand amount of hydrogen and the like is expected to increase in the consumption area R2 or when the sales price of hydrogen and the like is expected to increase in the consumption area R2. At this time, the sales planning unit 102 may determine the sales amount of the hydrogen carriers within the range that satisfies the supply capacity (including manufacturing, transportation, dehydrogenation, etc.) of the hydrogen carriers. When the sales amount is increased in the sales plan, the upper limit power price is set higher, and sales of hydrogen and the like can be increased.

Further, for example, the sales planning unit 102 may reduce the sales amount of hydrogen carriers when the demand amount of hydrogen and the like is expected to decrease in the consumption area R2. When the sales amount is decreased in the sales plan, the upper limit power price is set lower, and the manufacturing cost of hydrogen and the like can be reduced.

In step S3, the power calculation unit 103 of the control apparatus 100 reads the sales plan of hydrogen carriers stored in the sales plan storage unit 121. Next, the power calculation unit 103 calculates the manufacturing amount of hydrogen carriers based on the read sales plan. Subsequently, the power calculation unit 103 calculates the required power amount based on the calculated manufacturing amount of hydrogen carriers.

The power calculation unit 103 calculates the manufacturing amount of hydrogen carriers and the required power while considering the efficiency of the hydrogen manufacturing device 10 and the hydrogen carrier manufacturing device 20. The power calculation unit 103 calculates the required power amount including the load of peripheral devices in addition to the hydrogen manufacturing device 10 and the hydrogen carrier manufacturing device 20. The power calculation unit 103 then sends the calculated required power amount to the price calculation unit 104.

In step S4, the price calculation unit 104 of the control apparatus 100 receives the manufacturing amount of the hydrogen carriers and the required power amount from the power calculation unit 103. Next, the price calculation unit 104 reads the power market price profile stored in the predicted price storage unit 120.

Next, the price calculation unit 104 calculates the average power price and the maximum power price when the required power amount is satisfied based on the read power market price profile. Next, the price calculation unit 104 sends the average power price to the cost calculation unit 105. The price calculation unit 104 also sends the maximum power price to the threshold setting unit 106.

### <<Calculation of average power price and upper limit power price>>

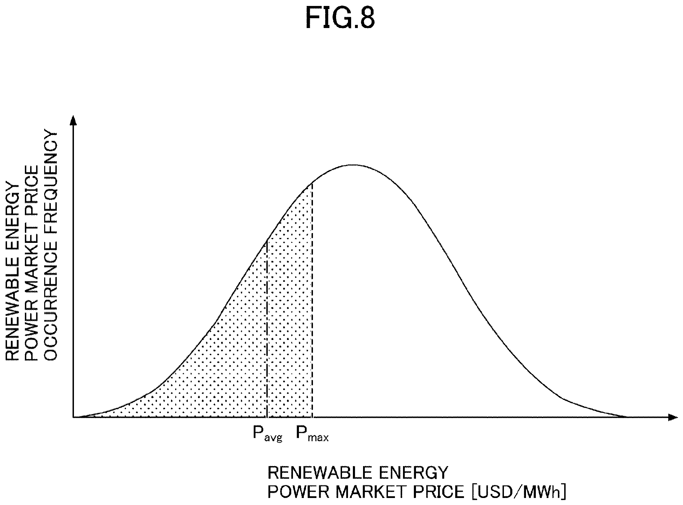

The calculation method of average power price and upper limit power price in the present embodiment will be described with reference to FIG. 8. FIG. 8 is a diagram illustrating an example of the power market price profile in the present embodiment.

As illustrated in FIG. 8, the power market price profile in the present embodiment is a graph illustrating the frequency distribution of the power market price of renewable energy generated per unit time, with the horizontal axis representing the power market price of renewable energy [USD/MWh] and the vertical axis representing the power market price occurrence frequency of renewable energy. It is preferable that the unit time matches the plan period.

Because the amount of power derived from renewable energy fluctuates depending on the season and weather, the market price of power derived from renewable energy also fluctuates according to the amount of power generated. Therefore, the power market price of a specific month can be roughly predicted by performing statistical processing such as averaging on data obtained by recording the power market price for the past several years. The power market price may also be predicted by simulation or machine learning by using time-series data of power market price in the past.

In the calculation of the average power price and the maximum power price, the power market price occurrence frequency is calculated from the lower power price (left side of the graph) in the power market price profile. Because the power market price for one time means that power is purchased only at the interval of updating the power market price (for example, 5 minutes), the price when the power price occurrence frequency is integrated and the required power amount is reached, becomes the maximum power price Pₘₐₓ for satisfying the required power amount. If the maximum power price Pₘₐₓ is obtained, the average power price P_{avg} can be obtained from the shape of the power market price profile.

According to the above calculation method, the higher the sales amount of hydrogen carriers in the sales plan, the higher the maximum power price Pₘₐₓ. As a result, sales of hydrogen and the like can be increased. The sales amount of hydrogen carriers is set higher if demand for hydrogen and the like is expected to increase in the consumption area R2 or if the sales price of hydrogen and the like is expected to increase in the consumption area R2.

On the other hand, the lower the sales amount of hydrogen carriers in the sales plan, the lower the maximum power price Pₘₐₓ. As a result, the manufacturing cost of hydrogen and the like can be reduced. The sales amount of the hydrogen carriers is set to be small when the demand amount of hydrogen and the like is expected to decrease in the consumption area R2.

Referring back to FIG. 7, the explanation will be given. In step S5, the cost calculation unit 105 of the control apparatus 100 receives the average power price from the price calculation unit 104. Next, the cost calculation unit 105 calculates the levelized hydrogen cost of the hydrogen carriers based on the average power price. Subsequently, the cost calculation unit 105 sends the levelized hydrogen cost of the hydrogen carriers to the threshold setting unit 106.

In step S6, the threshold setting unit 106 of the control apparatus 100 receives the levelized hydrogen cost of the hydrogen carriers from the cost calculation unit 105. Next, the threshold setting unit 106 reads the sales plan stored in the sales plan storage unit 121. Subsequently, the threshold setting unit 106 obtains the sales price of the hydrogen carriers from the read sales plan.

Next, the threshold setting unit 106 calculates the difference between the levelized hydrogen cost and the sales price of the hydrogen carriers. Next, the threshold setting unit 106 compares the difference between the levelized hydrogen cost and the sales price with a predetermined threshold. If the difference between the levelized hydrogen cost and the sales price is less than the threshold (NO), the threshold setting unit 106 returns the process to step S2. On the other hand, if the difference between the levelized hydrogen cost and the sales price is greater than or equal to the threshold (YES), the threshold setting unit 106 advances the process to step S7.

In step S7, the threshold setting unit 106 of the control apparatus 100 receives the maximum power price from the price calculation unit 104. Next, the threshold setting unit 106 sets the maximum power price as the upper limit power price. Subsequently, the threshold setting unit 106 stores the upper limit power price as control information in the control information storage unit 122.

In step S8, the price acquisition unit 107 of the control apparatus 100 acquires the power market price from the power market system M at predetermined time intervals. Next, the price acquisition unit 107 sends the power market price to the manufacturing amount determination unit 108.

In step S9, the manufacturing amount determination unit 108 of the control apparatus 100 receives the power market price from the price acquisition unit 107. Next, the manufacturing amount determination unit 108 reads the upper limit power price stored in the control information storage unit 122. Subsequently, the manufacturing amount determination unit 108 compares the power market price with the upper limit power price.

Next, the manufacturing amount determination unit 108 determines the manufacturing amount of the hydrogen carriers based on the comparison result of comparison between the power market price and the upper limit power price. For example, when the power market price is higher than the upper limit power price, the device control unit 109 reduces the manufacturing amount of the hydrogen carriers to 0 (or the minimum quantity). Further, for example, when the power market price is less than or equal to the upper limit power price, the device control unit 109 increases the manufacturing amount of the hydrogen carriers. The manufacturing amount determination unit 108 sends the determined manufacturing amount of the hydrogen carriers to the device control unit 109.

In step S10, the device control unit 109 of the control apparatus 100 receives the manufacturing amount of the hydrogen carriers from the manufacturing amount determination unit 108. Next, the device control unit 109 determines whether to change the manufacturing amount of the hydrogen carriers. The determination whether to change the manufacturing amount is made based on whether the current manufacturing amount is different from the new manufacturing amount determined by the manufacturing amount determination unit 108. In this case, it may be determined that the manufacturing amount is different when the difference between the current manufacturing amount and the new manufacturing amount is greater than or equal to a predetermined threshold.

If it is determined that the manufacturing amount of the hydrogen carriers is to be changed (YES), the device control unit 109 proceeds to step S11. On the other hand, if it is determined that the manufacturing amount of the hydrogen carriers is not to be changed (NO), the device control unit 109 skips step S11 and ends the control method processing.

In step S11, the device control unit 109 of the control apparatus 100 transmits a control signal for changing the power input to the hydrogen manufacturing device 10 to the power receiving and distributing facility 11. The control signal includes information indicating the power after the change.

The power receiving and distributing facility 11 receives the control signal from the control apparatus 100. Next, the power receiving and distributing facility 11 sets the power to be input to the hydrogen manufacturing device 10 based on the received control signal. The hydrogen manufacturing device 10 manufactures hydrogen according to the power input from the power receiving and distributing facility 11. Therefore, the hydrogen manufacturing device 10 manufactures hydrogen in the manufacturing amount according to the comparison result of comparison between the power market price and the upper limit power price.

### <Effect of the first embodiment>

The control apparatus 100 in the present embodiment sets the upper limit power price for determining whether or not to purchase the power for manufacturing at least one of hydrogen or the hydrogen carriers at the manufacturing area R1 where the hydrogen carriers are manufactured, based on the consumption area information about the consumption area R2 where the hydrogen carriers are consumed. Therefore, according to the control apparatus 100 in the present embodiment, the threshold for determining whether or not to purchase the power for manufacturing at least one of hydrogen or the hydrogen carriers can be set appropriately.

The control apparatus 100 in the present embodiment sets the upper limit power price based on the demand amount of hydrogen and the like at the consumption area R2. In particular, the control apparatus 100 in the present embodiment increases the set upper limit power price as the demand amount increases. If the upper limit power price is set higher when the demand amount is large, sales of hydrogen and the like can be increased. Further, the control apparatus 100 in the present embodiment sets the upper limit power price to be lower as the demand amount decreases. If the upper limit power price is set lower when the demand amount is small, the manufacturing cost of hydrogen and the like can be reduced. Therefore, according to the control apparatus 100 in the present embodiment, the threshold can be set appropriately to satisfy the demand amount of hydrogen and the like in the consumption area.

The control apparatus 100 in the present embodiment sets the upper limit power price based on the sales price of hydrogen and the like in the consumption area R2. In particular, the control apparatus 100 in the present embodiment increases the upper limit power price as the sales price is higher. If the upper limit power price is set higher when the sales price is higher, sales of hydrogen and the like can be increased. Further, the control apparatus 100 in the present embodiment lowers the upper limit power price as the sales price is lower. If the upper limit power price is set lower when the sales price is lower, the manufacturing cost of hydrogen and the like can be reduced. Therefore, according to the control apparatus 100 in the present embodiment, the threshold can be set appropriately in accordance with the sales price of hydrogen and the like in the consumption area.

The control apparatus 100 in the present embodiment sets the upper limit power price based on the constraint condition for delivering the hydrogen carriers to the consumption area R2. The constraint condition includes at least one of the constraints related to the facility for receiving the hydrogen carriers at the consumption area R2 or the constraints related to the transportation means for transporting the hydrogen carriers from the manufacturing area R1 to the consumption area R2. Therefore, according to the control apparatus 100 in the present embodiment, the threshold can be set appropriately to satisfy the constraint condition for delivering the hydrogen carriers to the consumption area.

The hydrogen carrier manufacturing system 1 in the present embodiment controls the manufacturing amount of hydrogen carriers based on the comparison result of comparison between the upper limit power price set by the control apparatus 100 and the power market price. Therefore, according to the hydrogen carrier manufacturing system 1, it is possible to control the purchase amount of power for manufacturing at least one of hydrogen or hydrogen carriers according to the fluctuation of the power market price which is updated every few minutes, for example. Because the power price changes from time to time in the power market, the influence on the manufacturing cost of hydrogen carriers is large. In particular, the market price of power derived from renewable energy such as solar power generation and wind power generation fluctuates greatly depending on the season and weather. Therefore, according to the hydrogen carrier manufacturing system 1, the total margin in the manufacturing of hydrogen carriers can be maximized.

Therefore, according to the hydrogen carrier manufacturing system 1 of the present embodiment, the amount of purchased power can be varied in detail according to the power market price which fluctuates every few minutes. Further, the hydrogen carriers can be appropriately manufactured according to the market price, the demand amount, the cost of the dehydrogenation processing in the consumption area of hydrogen, and the like. For example, when the sales price rises or the demand increases in the consumption area, the manufacturing of hydrogen carriers can be increased considering the supply capacity (manufacturing, transportation, dehydrogenation, etc.) of the entire supply chain. Further, production adjustment of the hydrogen carriers can be performed based on the levelized hydrogen cost, for example, when demand decreases in the consumption area.

### [Second embodiment]

In the first embodiment of the present invention, a configuration of a hydrogen carrier manufacturing system for manufacturing one type of hydrogen carrier out of a plurality of types of hydrogen carriers has been described. In the second embodiment of the present invention, a configuration of a hydrogen carrier manufacturing system for manufacturing a plurality of types of hydrogen carriers in parallel will be described. In the hydrogen carrier manufacturing system of the present embodiment, the manufacturing amount of each type of hydrogen carrier is determined based on consumer information about the plurality of types of hydrogen carriers, and the power input to the hydrogen manufacturing device is controlled so as to satisfy the manufacturing amounts.

In the present embodiment, a configuration for manufacturing methylcyclohexane and ammonia as the plurality of types of hydrogen carriers will be described, but the combination of the plurality of types of hydrogen carriers is not limited thereto. The plurality of types of hydrogen carriers can be any combination of different types of hydrogen carriers, and the number of types can be determined to be any number. For example, the hydrogen carrier manufacturing system may manufacture two types of hydrogen carriers which are methylcyclohexane and liquid hydrogen, or may manufacture two types of hydrogen carriers which are ammonia and liquid hydrogen, or may manufacture three types of hydrogen carriers which are methylcyclohexane, ammonia, and liquid hydrogen.

Hereinafter, the hydrogen carrier manufacturing system of the present embodiment will be described focusing on differences from the first embodiment.

### <Hydrogen supply chain>

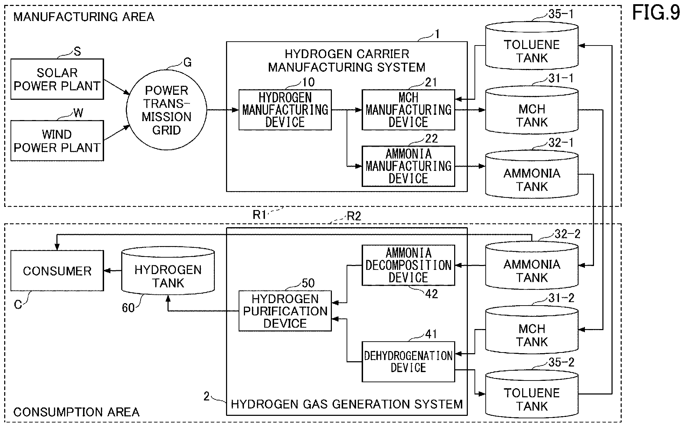

The hydrogen supply chain of the present embodiment will be described with reference to FIG. 9. FIG. 9 is a diagram illustrating an example of a hydrogen supply chain in which methylcyclohexane and ammonia are manufactured in parallel as hydrogen carriers.

As illustrated in FIG. 9, in the hydrogen supply chain of the present embodiment, a hydrogen carrier manufacturing system 1, an MCH tank 31-1, an ammonia tank 32-1, and a toluene tank 35-1 are installed at the manufacturing area R1. The hydrogen carrier manufacturing system 1 includes a hydrogen manufacturing device 10, an MCH manufacturing device 21, and an ammonia manufacturing device 22.

A hydrogen gas generation system 2, an MCH tank 31-2, an ammonia tank 32-2, a toluene tank 35-2, and a hydrogen tank 60 are installed in the consumption area R2. The hydrogen gas generation system 2 includes a dehydrogenation device 41, an ammonia decomposition device 42, and a hydrogen purification device 50.

### <Overall configuration of the hydrogen carrier manufacturing system>

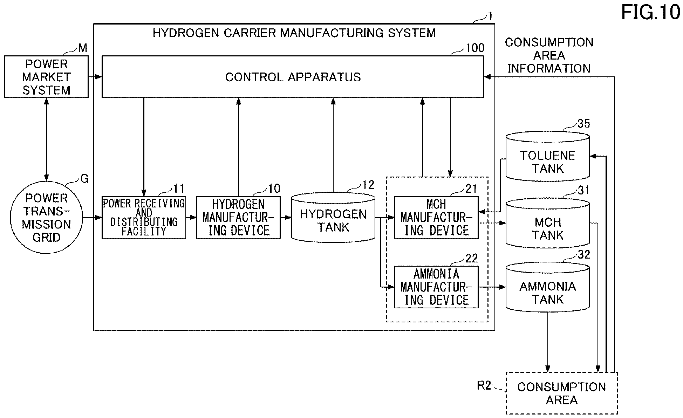

The overall configuration of the hydrogen carrier manufacturing system of the present embodiment will be described with reference to FIG. 10. FIG. 10 is a block diagram illustrating an example of the overall configuration of the hydrogen carrier manufacturing system of the present embodiment.

As illustrated in FIG. 10, the hydrogen carrier manufacturing system 1 of the present embodiment includes a hydrogen manufacturing device 10, a power receiving and distributing facility 11, a hydrogen tank 12, an MCH manufacturing device 21, an ammonia manufacturing device 22, and a control apparatus 100. The hydrogen carrier manufacturing system 1 of the present embodiment is connected to a power market system M located at the manufacturing area R1, a power transmission grid G, an MCH tank 31, an ammonia tank 32, and a toluene tank 35.

The control apparatus 100 in the present embodiment controls the operation of each device included in the hydrogen carrier manufacturing system 1. The control apparatus 100 transmits a control signal to control the operation of at least the power receiving and distributing facility 11, the MCH manufacturing device 21, and the ammonia manufacturing device 22 based on the control information generated based on the consumption area information.

### <Functional configuration of the hydrogen carrier manufacturing system>

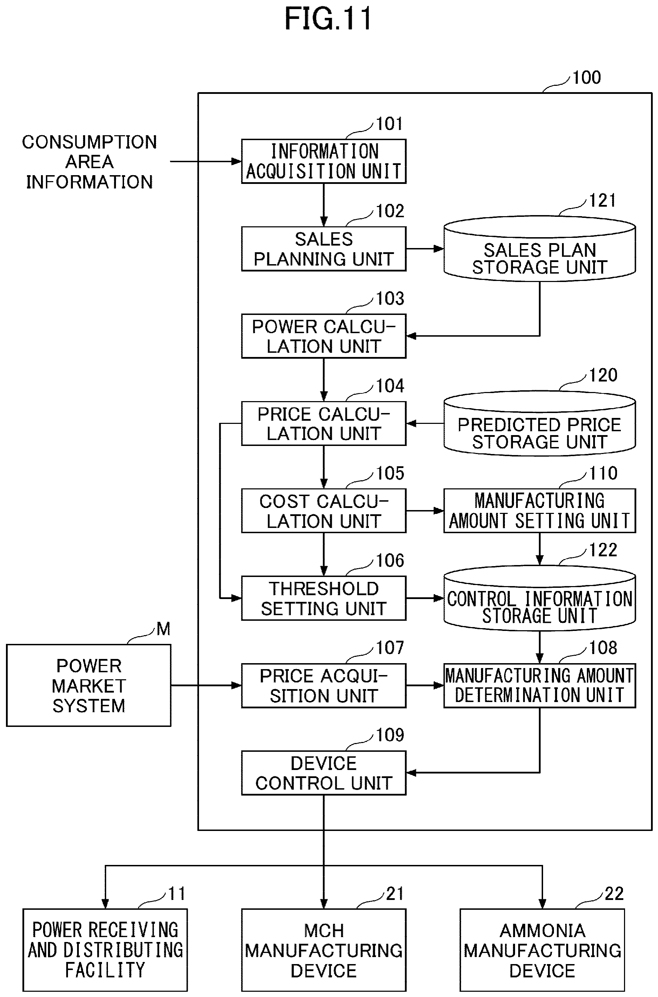

The functional configuration of the hydrogen carrier manufacturing system in the present embodiment will be described with reference to FIG. 11. FIG. 11 is a block diagram illustrating an example of the functional configuration of the hydrogen carrier manufacturing system 1 in the present embodiment.

### <Functional configuration of the control apparatus>

As illustrated in FIG. 11, the control apparatus 100 in the present embodiment includes an information acquisition unit 101, a sales planning unit 102, a power calculation unit 103, a price calculation unit 104, a cost calculation unit 105, a threshold setting unit 106, a price acquisition unit 107, a manufacturing amount determination unit 108, a device control unit 109, a manufacturing amount setting unit 110, a predicted price storage unit 120, a sales plan storage unit 121, and a control information storage unit 122. That is, the control apparatus 100 according to the present embodiment is different from the first embodiment in that it further includes the manufacturing amount setting unit 110.

The information acquisition unit 101 in the present embodiment acquires consumption area information about each type of hydrogen carrier. The consumption area information in the present embodiment includes the demand amount of each type of hydrogen carrier, the sales price of each type of hydrogen carrier, and constraint conditions for delivering each type of hydrogen carrier.

The sales planning unit 102 in the present embodiment plans a sales plan for each type of hydrogen carrier in a predetermined plan period based on the consumption area information about each type of hydrogen carrier acquired by the information acquisition unit 101.

For example, the sales planning unit 102 may increase the sales amount of each type of hydrogen carrier when the demand amount of hydrogen and the like is expected to increase in the consumption area R2 or when the sales price of hydrogen and the like is expected to increase in the consumption area R2. At this time, the sales planning unit 102 may determine the sales amount of each type of hydrogen carrier within a range that satisfies the supply capacity of each type of hydrogen carrier. When the sales amount is increased in the sales plan, the upper limit power price is set higher and sales of hydrogen and the like can be increased.

For example, the sales planning unit 102 may reduce the sales amount of each type of hydrogen carrier when the demand amount of hydrogen and the like is expected to decrease in the consumption area R2. At this time, the sales planning unit 102 may reduce the sales amount from the type of hydrogen carriers whose levelized hydrogen cost calculated by the cost calculation unit 105 is high. If the sales amount is reduced in the sales plan, the upper limit power price is set low, and the manufacturing cost of hydrogen and the like can be reduced.

The power calculation unit 103 in the present embodiment calculates the manufacturing amount of each type of hydrogen carrier and the total amount of power required to satisfy the manufacturing amount of each type of hydrogen carrier (hereinafter also referred to as "total required power amount") based on the sales plan for each type of hydrogen carrier made by the sales planning unit 102.

The price calculation unit 104 in the present embodiment calculates the average power price and the maximum power price when the total required power amount calculated by the power calculation unit 103 is satisfied based on the power market price profile stored in the predicted price storage unit 120.

The cost calculation unit 105 in the present embodiment calculates the levelized hydrogen cost of each type of hydrogen carrier based on the average power price calculated by the price calculation unit 104.

In the present embodiment, the threshold setting unit 106 compares the difference between the levelized hydrogen cost calculated by the cost calculation unit 105 and the sales price, with a predetermined threshold, for each type of hydrogen carrier. When the difference between the levelized hydrogen cost and the sales price for any type of hydrogen carrier is less than the threshold, the threshold setting unit 106 returns the process to the sales planning unit 102 and makes a sales plan again. On the other hand, when the difference between the levelized hydrogen cost and the sales price for all types of hydrogen carriers is greater than or equal to the threshold, the threshold setting unit 106 sets the maximum power price calculated by the price calculation unit 104 as the upper limit power price.

The manufacturing amount setting unit 110 determines the upper limit manufacturing amount of each type of hydrogen carrier based on the manufacturing amount of each type of hydrogen carrier calculated by the power calculation unit 103. The manufacturing amount setting unit 110 stores the determined upper limit manufacturing amount of each type of hydrogen carrier in the control information storage unit 122 as control information.

The manufacturing amount determination unit 108 in the present embodiment determines the manufacturing amount of each type of hydrogen carrier based on the comparison result of comparison between the power market price and the upper limit power price. At this time, the manufacturing amount determination unit 108 determines the manufacturing amount of each type of hydrogen carrier so as not to exceed the upper limit manufacturing amount of each type of hydrogen carrier.

The device control unit 109 in the present embodiment determines whether to change the manufacturing amount of each type of hydrogen carrier based on the manufacturing amount of each type of hydrogen carrier determined by the manufacturing amount determination unit 108. When changing the manufacturing amount of methylcyclohexane or ammonia, the device control unit 109 transmits a control signal for changing the manufacturing amount of each type of hydrogen carrier to the MCH manufacturing device 21 or the ammonia manufacturing device 22.

### <Control method processing procedure>

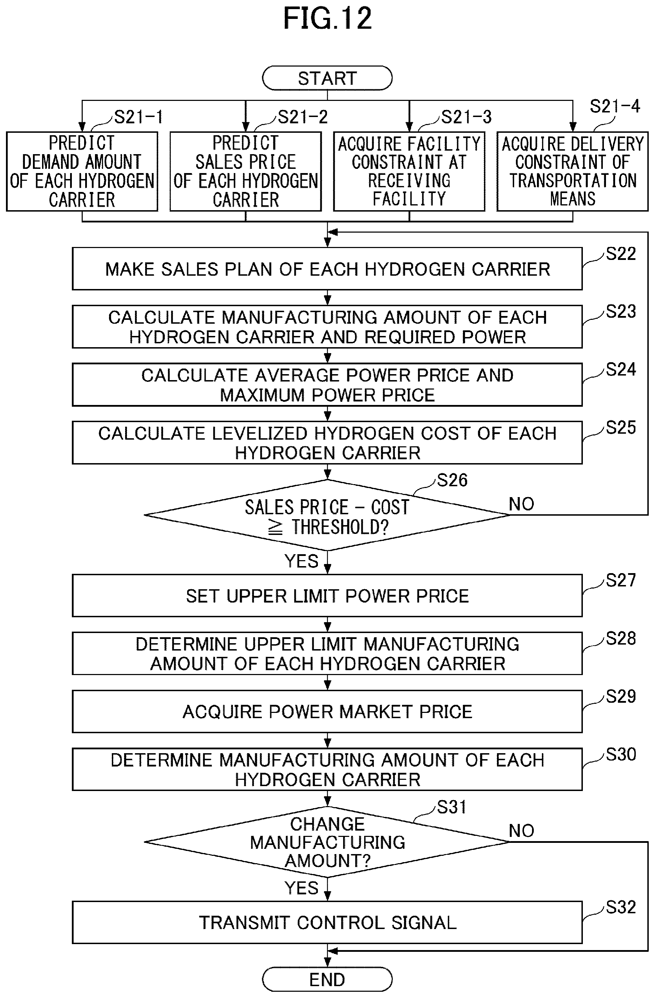

The control method executed by the control apparatus 100 in the present embodiment will be described with reference to FIG. 12. FIG. 12 is a flowchart illustrating an example of the control method in the present embodiment.

In step S21-1, the information acquisition unit 101 of the control apparatus 100 acquires the demand amount of hydrogen and each type of hydrogen carrier in the consumption area R2. The information acquisition unit 101 sends information indicating the acquired demand amount of hydrogen and each type of hydrogen carrier to the sales planning unit 102.

In step S21-2, the information acquisition unit 101 of the control apparatus 100 acquires the sales price of hydrogen and each type of hydrogen carrier in the consumption area R2. The information acquisition unit 101 sends information indicating the acquired sales price of hydrogen and each type of hydrogen carrier to the sales planning unit 102.

In step S21-3, the information acquisition unit 101 of the control apparatus 100 acquires the facility constraints related to hydrogen and each type of hydrogen carrier in the consumption area R2. The information acquisition unit 101 sends information indicating the acquired facility constraints to the sales planning unit 102.

In step S21-4, the information acquisition unit 101 of the control apparatus 100 acquires the transportation constraints related to hydrogen and each type of hydrogen carrier in the consumption area R2. The information acquisition unit 101 sends information indicating the acquired transportation constraints to the sales planning unit 102.

In step S22, the sales planning unit 102 of the control apparatus 100 receives the consumption area information related to each type of hydrogen carrier from the information acquisition unit 101. The consumption area information includes information indicating demand amount, sales price, facility constraint, and transportation constraint obtained in steps S21-1 to S21-4. Next, the sales planning unit 102 plans a sales plan for each type of hydrogen carrier during a predetermined plan period based on the received consumption area information. Subsequently, the sales planning unit 102 stores information indicating the planned sales plan in the sales plan storage unit 121.

In step S23, the power calculation unit 103 of the control apparatus 100 reads the sales plan for each type of hydrogen carrier stored in the sales plan storage unit 121. Next, the power calculation unit 103 calculates the manufacturing amount of each type of hydrogen carrier based on the read sales plan. Next, the power calculation unit 103 calculates the total required power amount based on the calculated manufacturing amount of each type of hydrogen carrier. Then, the power calculation unit 103 sends the calculated total required power amount to the price calculation unit 104. The power calculation unit 103 also sends the calculated manufacturing amount of each type of hydrogen carrier to the manufacturing amount setting unit 110.

In step S24, the price calculation unit 104 of the control apparatus 100 receives the manufacturing amount of each type of hydrogen carrier and the total required power amount from the power calculation unit 103. Next, the price calculation unit 104 reads the power market price profile stored in the predicted price storage unit 120. Next, the price calculation unit 104 calculates the average power price and the maximum power price when the total required power amount is satisfied based on the read power market price profile. Next, the price calculation unit 104 sends the average power price to the cost calculation unit 105. The price calculation unit 104 also sends the maximum power price to the threshold setting unit 106.

In step S25, the cost calculation unit 105 of the control apparatus 100 receives the average power price from the price calculation unit 104. Next, the cost calculation unit 105 calculates the levelized hydrogen cost of each type of hydrogen carrier based on the average power price. Subsequently, the cost calculation unit 105 sends the levelized hydrogen cost of each type of hydrogen carrier to the threshold setting unit 106.

In step S26, the threshold setting unit 106 of the control apparatus 100 receives the levelized hydrogen cost of each type of hydrogen carrier from the cost calculation unit 105. Next, the threshold setting unit 106 reads the sales plan stored in the sales plan storage unit 121. Next, the threshold setting unit 106 obtains the sales price of each type of hydrogen carrier from the read sales plan.

Next, the threshold setting unit 106 calculates the difference between the levelized hydrogen cost and the sales price for each type of hydrogen carrier. Next, the threshold setting unit 106 compares the difference between the levelized hydrogen cost and the sales price, with a predetermined threshold, for each type of hydrogen carrier. If the difference between the levelized hydrogen cost and the sales price for any type of hydrogen carrier is less than the threshold (NO), the threshold setting unit 106 returns the process to step S22. On the other hand, if the difference between the levelized hydrogen cost and the sales price for all types of hydrogen carriers is greater than or equal to the threshold (YES), the threshold setting unit 106 advances the process to step S27.

In step S27, the threshold setting unit 106 of the control apparatus 100 receives the maximum power price from the price calculation unit 104. Next, the threshold setting unit 106 sets the maximum power price as the upper limit power price. Subsequently, the threshold setting unit 106 stores the upper limit power price as control information in the control information storage unit 122.

In step S28, the manufacturing amount setting unit 110 of the control apparatus 100 receives the manufacturing amount of each type of hydrogen carrier from the power calculation unit 103. Next, the manufacturing amount setting unit 110 determines the upper limit manufacturing amount of each type of hydrogen carrier based on the manufacturing amount of each type of hydrogen carrier. At this time, the manufacturing amount setting unit 110 determines the upper limit manufacturing amount of each type of hydrogen carrier in consideration of the load fluctuation of the hydrogen carrier manufacturing device for manufacturing each type of hydrogen carrier. Subsequently, the manufacturing amount setting unit 110 stores the upper limit manufacturing amount of each type of hydrogen carrier in the control information storage unit 122 as control information.

In step S29, the price acquisition unit 107 of the control apparatus 100 acquires the power market price from the power market system M at predetermined time intervals. Next, the price acquisition unit 107 sends the power market price to the manufacturing amount determination unit 108.

In step S30, the manufacturing amount determination unit 108 of the control apparatus 100 receives the power market price from the price acquisition unit 107. Next, the manufacturing amount determination unit 108 reads the upper limit power price and the maximum manufacturing amount of each type of hydrogen carrier stored in the control information storage unit 122. Subsequently, the manufacturing amount determination unit 108 compares the power market price with the upper limit power price.

Next, the manufacturing amount determination unit 108 determines the manufacturing amount of each type of hydrogen carrier based on the comparison result of comparison between the power market price and the upper limit power price. At this time, the manufacturing amount determination unit 108 determines the manufacturing amount of each type of hydrogen carrier so as not to exceed the upper limit manufacturing amount of each type of hydrogen carrier. The manufacturing amount determination unit 108 sends the determined manufacturing amount of each type of hydrogen carrier to the device control unit 109.

In step S31, the device control unit 109 of the control apparatus 100 receives the manufacturing amount of each type of hydrogen carrier from the manufacturing amount determination unit 108. Next, the device control unit 109 determines whether or not to change the manufacturing amount of each type of hydrogen carrier.

If it is determined that the manufacturing amount of any type of hydrogen carrier is to be changed (YES), the device control unit 109 proceeds to step S32. On the other hand, if it is determined that the manufacturing amount of none of the types of hydrogen carriers is to be changed (NO), the device control unit 109 skips step S32 and ends the control method processing.

In step S32, the device control unit 109 of the control apparatus 100 transmits a control signal for changing the power to be input to the hydrogen manufacturing device 10, to the power receiving and distributing facility 11. When the manufacturing amount of methylcyclohexane is to be changed, the device control unit 109 transmits a control signal for changing the manufacturing amount of methylcyclohexane to the MCH manufacturing device 21. When the manufacturing amount of ammonia is to be changed, the device control unit 109 transmits a control signal for changing the manufacturing amount of ammonia to the ammonia manufacturing device 22.

The MCH manufacturing device 21 and the ammonia manufacturing device 22 receive control signals from the control apparatus 100. Next, the MCH manufacturing device 21 sets the manufacturing amount of methylcyclohexane based on the received control signal, and manufactures methylcyclohexane so as to satisfy the manufacturing amount. The ammonia manufacturing device 22 sets the manufacturing amount of ammonia based on the received control signal, and manufactures ammonia so as to satisfy the manufacturing amount.

Each set value included in the control information may be reset at predetermined time intervals (for example, every few days). To determine whether or not to reset the value, the manufacturing amount of hydrogen carriers calculated based on the sales plan may be compared with the manufacturing amount of hydrogen carriers actually manufactured. For example, if the actual manufacturing amount greatly exceeds the planned manufacturing amount, the upper limit power price may be lowered. Further, for example, if the balance of the manufacturing amount of each type of hydrogen carrier deviates from the demand amount, the upper limit manufacturing amount of each type of hydrogen carrier may be adjusted.

### <Effect of the second embodiment>

The control apparatus 100 in the present embodiment sets the manufacturing amount of each of a plurality of types of hydrogen carriers based on the consumption area information about the consumption area where the hydrogen carriers are consumed. Therefore, according to the control apparatus 100 of the present embodiment, the manufacturing amount of each of the plurality of types of hydrogen carriers can be appropriately set.

The control apparatus 100 of the present embodiment sets the upper limit power price based on the total amount of power required to satisfy the manufacturing amount of each of the plurality of types of hydrogen carriers. Therefore, according to the control apparatus 100 of the present embodiment, the threshold for determining whether to purchase power for manufacturing at least hydrogen or any one of the plurality of types of hydrogen carriers can be appropriately set.

Therefore, according to the hydrogen carrier manufacturing system 1 of the present embodiment, in the plurality of types of hydrogen carrier manufacturing devices 20 having the hydrogen manufacturing device 10 as a common facility, the economic efficiency of each type of hydrogen carrier can be individually applied, and the total margin can be maximized. Further, each type of hydrogen carrier can be appropriately manufactured according to the market price, the demand amount, the cost of dehydrogenation processing, and the like in the hydrogen consumption area. For example, when demand decreases in the consumption area, the production of each type of hydrogen carrier can be adjusted in descending order according to the levelized hydrogen cost. Further, when the sales price and demand of each type of hydrogen carrier are different in the consumption area, the power purchase amount can be optimized by making a sales plan of each type of hydrogen carrier and adding them together.

### [Modified example 1]

In the first embodiment, the control apparatus 100 installed in the manufacturing area R1 controls each device included in the hydrogen carrier manufacturing system 1 based on the consumption area information acquired from the consumption area R2. In modified example 1, the control apparatus installed in the consumption area R2 transmits the consumption area information to the control apparatus 100.

### <Overall configuration of the hydrogen gas generation system>

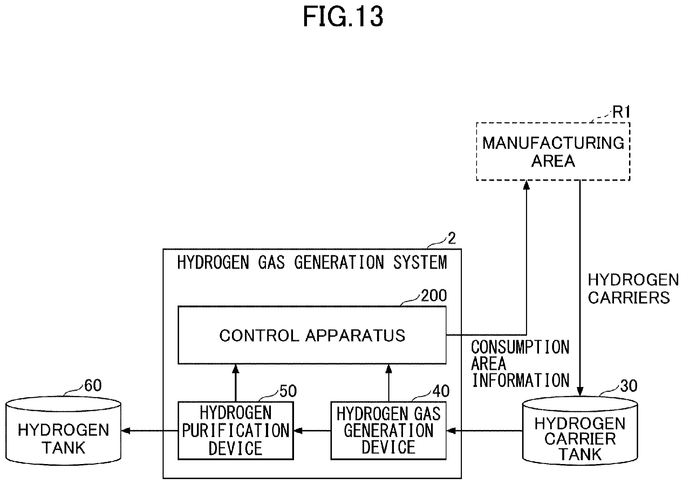

The overall configuration of the hydrogen gas generation system in this modified example will be described with reference to FIG. 13. FIG. 13 is a block diagram illustrating an example of the overall configuration of the hydrogen gas generation system in the present embodiment.

As illustrated in FIG. 13, the hydrogen gas generation system 2 in this modified example includes a hydrogen gas generation device 40, a hydrogen purification device 50, and a control apparatus 200. The hydrogen gas generation system 2 in this modified example is connected to the hydrogen carrier tank 30 and a hydrogen tank 60 in the consumption area R2.

The control apparatus 200 is an information processing apparatus such as a personal computer, a workstation, or a server that controls the operation of each device included in the hydrogen gas generation system 2. The control apparatus 200 is configured to enable mutual data communication with the hydrogen gas generation device 40 and the hydrogen purification device 50 via a communication network. The control apparatus 200 acquires the consumption area information about the consumption area R2 and transmits it to the control apparatus 100 of the hydrogen carrier manufacturing system 1.

### <Functional configuration of the hydrogen gas generation system>

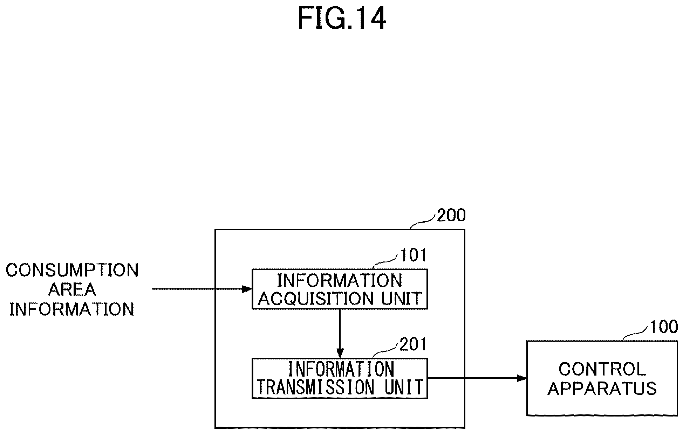

The functional configuration of the hydrogen gas generation system in this modified example will be described with reference to FIG. 14. FIG. 14 is a block diagram illustrating an example of the functional configuration of the hydrogen gas generation system 2 in this modified example.

### <<Functional configuration of the control apparatus>>

As illustrated in FIG. 14, the control apparatus 200 in this modified example includes an information acquisition unit 101 and an information transmission unit 201. The information acquisition unit 101 functions similarly to the information acquisition unit 101 provided in the control apparatus 100 in each embodiment.

The information transmission unit 201 transmits the consumption area information obtained by the information acquisition unit 101 to the control apparatus 100 of the hydrogen carrier manufacturing system 1.

In the hydrogen carrier manufacturing system 1, the information acquisition unit 101 provided in the control apparatus 100 receives the consumption area information from the control apparatus 200 to acquire the consumption area information. The control apparatus 100 controls each device included in the hydrogen carrier manufacturing system 1 based on the consumption area information in the same manner as the control apparatus 100 in each embodiment.

### [Modified example 2]

In modified example 1, the control apparatus 200 installed in the consumption area R2 transmits the consumption area information to the control apparatus 100. In modified example 2, the control apparatus installed in the consumption area R2 is configured to transmit control information to the control apparatus 100.

### <Functional configuration of the hydrogen gas generation system>

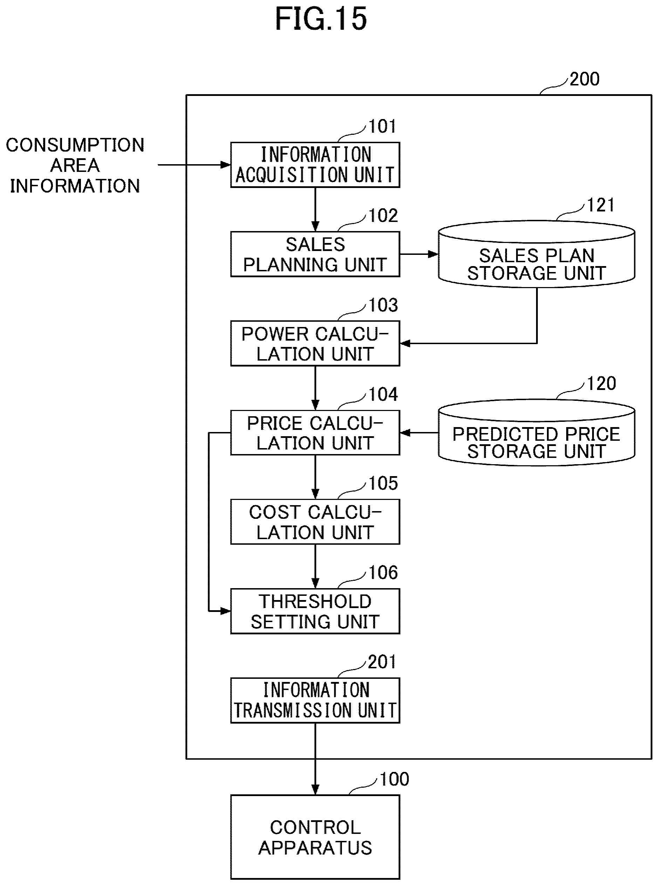

The functional configuration of the hydrogen gas generation system in this modified example will be described with reference to FIG. 15. FIG. 15 is a block diagram illustrating an example of the functional configuration of the hydrogen gas generation system 2 in this modified example.

### <<Functional configuration of the control apparatus>>

As illustrated in FIG. 15, the control apparatus 200 in this modified example includes an information acquisition unit 101, a sales planning unit 102, a power calculation unit 103, a price calculation unit 104, a cost calculation unit 105, a threshold setting unit 106, a predicted price storage unit 120, a sales plan storage unit 121, and an information transmission unit 201. That is, the control apparatus 200 in this modified example is different from the control apparatus 100 in the first embodiment in that it does not include the price acquisition unit 107, the manufacturing amount determination unit 108, the device control unit 109, or the control information storage unit 122, but includes an information transmission unit 201.

The information transmission unit 201 in this modified example transmits control information including the upper limit power price set by the threshold setting unit 106 to the control apparatus 100 of the hydrogen carrier manufacturing system 1.

In the hydrogen carrier manufacturing system 1, the control apparatus 100 receives control information from the control apparatus 200 and stores it in the control information storage unit 122. The control apparatus 100 controls each device included in the hydrogen carrier manufacturing system 1 based on the control information read from the control information storage unit 122 as in the case of the control apparatus 100 in each embodiment.

### [Application example]

The control apparatus 100 in each embodiment can be applied not only to the hydrogen carrier manufacturing system 1 in the operation stage but also to the hydrogen carrier manufacturing system 1 in the planning stage. That is, if the consumption area information about the consumption area and the estimated value of the power market price can be obtained, the upper limit power price can be set, and the total margin in the case of operating at the upper limit power price can be estimated. Therefore, the control apparatus 100 in each embodiment can be applied to maximize the economic efficiency of the hydrogen carrier manufacturing system 1 in the planning stage and optimize the investment scope.

### [Note]

Each of the functions of the above-described embodiments can be implemented by one or more processing circuits. Here, the term "processing circuit" as used herein includes a processor programmed to execute each function by software such as a CPU (Central Processing Unit) or a GPU (Graphics Processing Unit) implemented by an electronic circuit, and equipment such as an ASIC (Application Specific Integrated Circuit), DSP (Digital Signal Processor), FPGA (Field Programmable Gate Array), or a conventional circuit module designed to execute each of the above-described functions.

Note that, in the disclosed technology, modes as described in the clauses below can be considered.

### (Clause 1)

A control apparatus including:
an information acquisition unit configured to acquire consumption area information relating to a consumption area at which at least one of hydrogen or a hydrogen carrier is consumed; and
a threshold setting unit configured to set a threshold for determining whether or not to purchase power for manufacturing at least one of the hydrogen or the hydrogen carrier at a manufacturing area at which the hydrogen carrier is manufactured, based on the consumption area information.

### (Clause 2)

The control apparatus according to clause 1, wherein the consumption area information includes a demand amount of at least one of the hydrogen or the hydrogen carrier in the consumption area.

### (Clause 3)

The control apparatus according to clause 2, wherein the threshold setting unit sets the threshold higher as the demand amount increases.

### (Clause 4)

The control apparatus according to clause 1, wherein the consumption area information includes a sales price of at least one of the hydrogen or the hydrogen carrier in the consumption area.

### (Clause 5)

The control apparatus according to clause 4, wherein the threshold setting unit sets the threshold higher as the sales price is higher.

### (Clause 6)

The control apparatus according to clause 1, wherein the threshold setting unit sets the threshold based on a predicted value of a power price at the manufacturing area.

### (Clause 7)

The control apparatus according to clause 6, wherein the threshold setting unit sets the threshold based on a comparison result of comparison between a cost calculated based on the predicted value and a sales price of at least one of the hydrogen or the hydrogen carrier calculated based on the consumption area information.

### (Clause 8)

The control apparatus according to clause 1, wherein the consumption area information includes a constraint condition for delivering the hydrogen carrier to the consumption area.

### (Clause 9)

The control apparatus according to clause 8, wherein the constraint condition includes at least one of a constraint relating to a facility for receiving the hydrogen carrier at the consumption area or a constraint relating to a transportation means for transporting the hydrogen carrier from the manufacturing area to the consumption area.

### (Clause 10)

The control apparatus according to clause 1, wherein
the hydrogen carrier includes a plurality of kinds of hydrogen carriers, and
the consumption area information includes at least one of a demand amount or a sales price for at least one of the hydrogen or any one of the plurality of kinds of hydrogen carriers at the consumption area.

### (Clause 11)

The control apparatus according to clause 10, further including:
a manufacturing amount setting unit configured to set a manufacturing amount of the hydrogen carrier for each of the plurality of kinds of hydrogen carriers, based on the consumption area information.

### (Clause 12)

The control apparatus according to any one of clauses 1 to 11, further including:
an information transmission unit configured to transmit control information including at least the threshold, to a control apparatus configured to control a hydrogen manufacturing device configured to manufacture the hydrogen and a hydrogen carrier manufacturing device configured to convert the hydrogen into the hydrogen carrier.

### (Clause 13)

A control apparatus including:
an information acquisition unit configured to acquire consumption area information relating to a consumption area at which at least one of hydrogen or a hydrogen carrier is consumed; and
an information transmission unit configured to transmit the consumption area information to a control apparatus that is configured to control a hydrogen manufacturing device configured to manufacture the hydrogen and a hydrogen carrier manufacturing device configured to convert the hydrogen into the hydrogen carrier and that is installed at a manufacturing area at which at least one of the hydrogen or the hydrogen carrier is manufactured.

### (Clause 14)

The control apparatus according to clause 13, wherein the consumption area information includes a demand amount of at least one of the hydrogen or the hydrogen carrier in the consumption area.

### (Clause 15)

The control apparatus according to clause 13, wherein the consumption area information includes a sales price of at least one of the hydrogen or the hydrogen carrier in the consumption area.

### (Clause 16)

The control apparatus according to clause 13, wherein the consumption area information includes a constraint condition for delivering the hydrogen carrier to the consumption area.

### (Clause 17)

The control apparatus according to clause 16, wherein the constraint condition includes at least one of a constraint relating to a facility for receiving the hydrogen carrier at the consumption area or a constraint relating to a transportation means for transporting the hydrogen carrier from the manufacturing area to the consumption area.

### (Clause 18)

A hydrogen carrier manufacturing system including:
a hydrogen manufacturing device configured to manufacture hydrogen by using power;
a hydrogen carrier manufacturing device configured to convert the hydrogen into a hydrogen carrier; and
a control apparatus capable of communicating with the hydrogen manufacturing device and the hydrogen carrier manufacturing device, wherein
the control apparatus includes:
   an information acquisition unit configured to acquire consumption area information relating to a consumption area at which at least one of the hydrogen or the hydrogen carrier is consumed; and
   a threshold setting unit configured to set a threshold for determining whether or not to purchase at least the power at a manufacturing area at which the hydrogen carrier is manufactured, based on the consumption area information, and wherein
the hydrogen manufacturing device manufactures the hydrogen based on a comparison result of comparison between a price of the power and the threshold.

### (Clause 19)

A control method executed by a control apparatus, the control method including:
acquiring consumption area information relating to a consumption area at which at least one of hydrogen or a hydrogen carrier is consumed; and
setting a threshold for determining whether or not to purchase power for manufacturing at least one of the hydrogen or the hydrogen carrier at a manufacturing area at which the hydrogen carrier is manufactured, based on the consumption area information.

### (Clause 20)

A control method executed by a control apparatus, the control method including:
acquiring consumption area information relating to a consumption area at which at least one of hydrogen or a hydrogen carrier is consumed; and
transmitting the consumption area information to a control apparatus that is configured to control a hydrogen manufacturing device configured to manufacture the hydrogen and a hydrogen carrier manufacturing device configured to convert the hydrogen into the hydrogen carrier and that is installed at a manufacturing area at which at least one of the hydrogen or the hydrogen carrier is manufactured.

Although the embodiments of the present invention have been described in detail above, the present invention is not limited to these embodiments, and various modifications or changes may be made within the scope of the gist of the present invention as described in the claims.

This application is based upon and claims priority to Japanese Patent Application No. 2023-25200, filed on February 21, 2023 before the Japan Patent Office, the entire contents of which are incorporated herein by reference.

### DESCRIPTION OF REFERENCE NUMERALS

1 hydrogen carrier manufacturing system
2 hydrogen gas generation system
10 hydrogen manufacturing device
11 power receiving and distributing facility
12 hydrogen tank
20 hydrogen carrier manufacturing device
21 MCH manufacturing device
22 ammonia manufacturing device
23 liquid hydrogen manufacturing device
30 hydrogen carrier tank
31 MCH tank
32 ammonia tank
33 liquid hydrogen tank
100 control apparatus
101 information acquisition unit
102 sales planning unit
103 power calculation unit
104 price calculation unit
105 cost calculation unit
106 threshold setting unit
107 price acquisition unit
108 manufacturing amount determination unit
109 device control unit
110 manufacturing amount setting unit
120 predicted price storage unit
121 sales plan storage unit
122 control information storage unit
200 control apparatus
201 information transmission unit

## Claims

1. A control apparatus comprising:
an information acquisition unit configured to acquire consumption area information relating to a consumption area at which at least one of hydrogen or a hydrogen carrier is consumed; and
a threshold setting unit configured to set a threshold for determining whether or not to purchase power for manufacturing at least one of the hydrogen or the hydrogen carrier at a manufacturing area at which the hydrogen carrier is manufactured, based on the consumption area information.

2. The control apparatus according to claim 1,
wherein the consumption area information includes a demand amount of at least one of the hydrogen or the hydrogen carrier in the consumption area.

3. The control apparatus according to claim 2,
wherein the threshold setting unit sets the threshold higher as the demand amount increases.

4. The control apparatus according to claim 1,
wherein the consumption area information includes a sales price of at least one of the hydrogen or the hydrogen carrier in the consumption area.

5. The control apparatus according to claim 4,
wherein the threshold setting unit sets the threshold higher as the sales price is higher.

6. The control apparatus according to claim 1,
wherein the threshold setting unit sets the threshold based on a predicted value of a power price at the manufacturing area.

7. The control apparatus according to claim 6,
wherein the threshold setting unit sets the threshold based on a comparison result of comparison between a cost calculated based on the predicted value and a sales price of at least one of the hydrogen or the hydrogen carrier calculated based on the consumption area information.

8. The control apparatus according to claim 1,
wherein the consumption area information includes a constraint condition for delivering the hydrogen carrier to the consumption area.

9. The control apparatus according to claim 8,
wherein the constraint condition includes at least one of a constraint relating to a facility for receiving the hydrogen carrier at the consumption area or a constraint relating to a transportation means for transporting the hydrogen carrier from the manufacturing area to the consumption area.

10. The control apparatus according to claim 1,
wherein
the hydrogen carrier includes a plurality of kinds of hydrogen carriers, and
the consumption area information includes at least one of a demand amount or a sales price for at least one of the hydrogen or any one of the plurality of kinds of hydrogen carriers at the consumption area.

11. The control apparatus according to claim 10, further comprising:
a manufacturing amount setting unit configured to set a manufacturing amount of the hydrogen carrier for each of the plurality of kinds of hydrogen carriers, based on the consumption area information.

12. The control apparatus according to any one of claims 1 to 11, further comprising:
an information transmission unit configured to transmit control information including at least the threshold, to a control apparatus configured to control a hydrogen manufacturing device configured to manufacture the hydrogen and a hydrogen carrier manufacturing device configured to convert the hydrogen into the hydrogen carrier.

13. A control apparatus comprising:
an information acquisition unit configured to acquire consumption area information relating to a consumption area at which at least one of hydrogen or a hydrogen carrier is consumed; and
an information transmission unit configured to transmit the consumption area information to a control apparatus that is configured to control a hydrogen manufacturing device configured to manufacture the hydrogen and a hydrogen carrier manufacturing device configured to convert the hydrogen into the hydrogen carrier and that is installed at a manufacturing area at which at least one of the hydrogen or the hydrogen carrier is manufactured.

14. A hydrogen carrier manufacturing system comprising:
a hydrogen manufacturing device configured to manufacture hydrogen by using power;
a hydrogen carrier manufacturing device configured to convert the hydrogen into a hydrogen carrier; and
a control apparatus capable of communicating with the hydrogen manufacturing device and the hydrogen carrier manufacturing device, wherein
the control apparatus includes:
an information acquisition unit configured to acquire consumption area information relating to a consumption area at which at least one of the hydrogen or the hydrogen carrier is consumed; and
a threshold setting unit configured to set a threshold for determining whether or not to purchase at least the power at a manufacturing area at which the hydrogen carrier is manufactured, based on the consumption area information, and wherein
the hydrogen manufacturing device manufactures the hydrogen based on a comparison result of comparison between a price of the power and the threshold.

15. A control method executed by a control apparatus, the control method comprising:
acquiring consumption area information relating to a consumption area at which at least one of hydrogen or a hydrogen carrier is consumed; and
setting a threshold for determining whether or not to purchase power for manufacturing at least one of the hydrogen or the hydrogen carrier at a manufacturing area at which the hydrogen carrier is manufactured, based on the consumption area information.
